# FASCICULE DE BREVET EUROPEEN

(11) **EP 1 244 934 B1**
(45) Date de publication et mention de la délivrance du brevet: **16.02.2005**
(21) Numéro de dépôt: 00993745.9
(22) Date de dépôt: 27.12.2000
(51) Int. Cl.: G02C 9/04

(54) **DISPOSITIF DE FIXATION DE VERRES SUPPLEMENTAIRES SUR DES LUNETTES**
VORRICHTUNG ZUR BEFESTIGUNG ZUSÄTZLICHER LINSEN AUF BRILLEN
DEVICE FOR FIXING ADDITIONAL LENSES ON SPECTACLES

(30) Priorité: 07.01.2000 FR 0000142
(43) Date de publication de la demande: 02.10.2002
(73) Titulaire: Lavie, Philippe, 78370 Plaisir (FR)
(72) Inventeur: Lavie, Philippe, 78370 Plaisir (FR)
(74) Mandataire: Cabinet Martinet & Lapoux
(86) Numéro de dépôt international: PCT/FR2000/003691
(87) Numéro de publication internationale: WO 2001/050185

(56) Documents cités:
- WO-A-99/15931
- WO-A-99/47965
- DE-U- 29 610 698
- US-A- 5 920 370

## Description

La présente invention concerne un dispositif de fixation de verres supplémentaires sur des lunettes.

Ces dispositifs sont le plus souvent utilisés pour monter des verres filtrants (verres de protection contre le rayonnement solaire) sur des lunettes à verres correcteurs et sont en général d'un type standard qui ne correspond pas à la monture des lunettes. Ils sont de plus équipés de verres qui n'ont pas la forme des verres correcteurs des lunettes, de sorte que l'ensemble formé du dispositif à verres filtrants et des lunettes à verres correcteurs est plutôt lourd, encombrant et peu esthétique. En outre, ces dispositifs connus comportent des moyens d'accrochage sur les lunettes, qui sont plus ou moins bien adaptés à la monture des lunettes.

On a déjà proposé, dans le brevet US 5 920 370, un dispositif de ce type qui est formé d'un pont en matière flexible et de deux supports également en matière flexible qui sont fixés par des vis sur le pont. Des fils de nylon sont fixés ou accrochés sur les supports pour le montage des verres sur les supports. Des crochets sont également montés par des vis sur les supports pour la fixation du dispositif sur des lunettes. Ce dispositif s'adapte mieux à la forme de la monture des lunettes, grâce à la flexibilité du pont et des supports, mais sa fabrication et son assemblage sont relativement complexes, longs et coûteux, en raison des fixations par vis des crochets et des supports.

Le document DE-A-196 04 790 décrit un dispositif de fixation de verres supplémentaires conforme au préambule de la revendication 1. Les deux branches supportant les verres supplémentaires ne sont pas reliées par un pont (au sens usuel de ce terme), mais par une série de cinq branches formant un U vertical et un U horizontal.

Le U horizontal sert de moyens d'accrochage sur les verres de lunettes.

Selon le DE-A-196 04 790, les moyens de liaison entre les verres supplémentaires comprennent trois branches formant l'étrier d'accrochage horizontal en U sur le pont des lunettes, et deux branches qui partent de l'étrier et qui s'étendent vers le bas en oblique, le long des bords des verres des lunettes, et se terminent par des coudes reliés aux branches supportant les verres supplémentaires. Cette structure des moyens de liaison est complexe et donc coûteuse.

Le dispositif selon le document DE-A-196 04 790 n'est pas adaptable automatiquement et sans modification à toutes les lunettes. Un opticien doit, avec une pince, modifier les coudes de l'étrier pour adapter la largeur de cet étrier à la longueur du pont des lunettes : si l'étrier est trop large, on ne peut le monter sur les lunettes et s'il est trop étroit, il devient visible et les branches vont s'appuyer sur le nez de la personne qui porte les lunettes et vont la gêner. D'ailleurs le document précité montre que la largueur de l'étrier correspond exactement à la longueur du pont des lunettes.

De plus, il faut aussi adapter la longueur des branches à la distance entre le pont des lunettes et les bords inférieurs des verres des lunettes ; sinon le montage est impossible.

L'invention a notamment pour but de simplifier la fabrication et l'assemblage d'un tel dispositif et donc d'en abaisser le coût.

Elle a également pour but de rendre un tel dispositif adaptable à tout type de lunette.

Elle propose à cet effet un dispositif de fixation de verres supplémentaires sur des lunettes, tel que défini dans la revendication 1.

Les caractéristiques du dispositif de l'invention simplifient beaucoup la structure de celui-ci, simplifient également sa fabrication et son assemblage, augmentent sa fiabilité et réduisent largement son prix de revient.

En outre, la flexibilité du pont et des branches permet une bonne adaptation à la forme des verres et à la forme de la monture des lunettes.

Avantageusement, le pont et les branches flexibles sont réalisés d'une seule pièce par moulage, en particulier de matière plastique ou de métal.

Selon encore une autre caractéristique de l'invention, les moyens d'accrochage sont formés d'une seule pièce avec lesdites branches.

Ainsi, une seule opération de moulage permet de réaliser un dispositif comprenant un pont, des branches de support des verres et des moyens d'accrochage, tels que des crochets flexibles, pour la fixation du dispositif sur des lunettes.

Selon encore une autre caractéristique de l'invention, au moins certains des moyens d'accrochage sont montés sur les fils souples de fixation des verres sur lesdites branches flexibles.

Avantageusement, ces moyens d'accrochage sont réglables en position, par coulissement sur les fils souples.

Cela permet d'adapter le dispositif selon l'invention à toute forme de monture de lunettes.

De façon générale, le dispositif selon l'invention est extrêmement simple puisqu'il peut être réalisé en une seule pièce, il est léger, peu visible et peu encombrant et il est adaptable à tous les types de montures et de verres de lunettes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- les figures 1 et 2 sont des vues de face et de dessus respectivement d'un premier mode de réalisation d'un dispositif selon l'invention ;
- la figure 3 est une vue de face, à plus grande échelle, d'une partie de ce dispositif ;
- la figure 4 est une vue en coupe selon la ligne IV-IV de la figure 3 ;
- la figure 5 est une vue de. dessous du dispositif de la figure 3 ;
- la figure 6 est une vue schématique de face d'une variante de réalisation du dispositif selon l'invention ;
- la figure 7 est une vue partielle à plus grande échelle d'un moyen d'accrochage du dispositif de la figure 6 ; et
- la figure 8 est une vue de dessus du moyen d'accrochage de la figure 7.

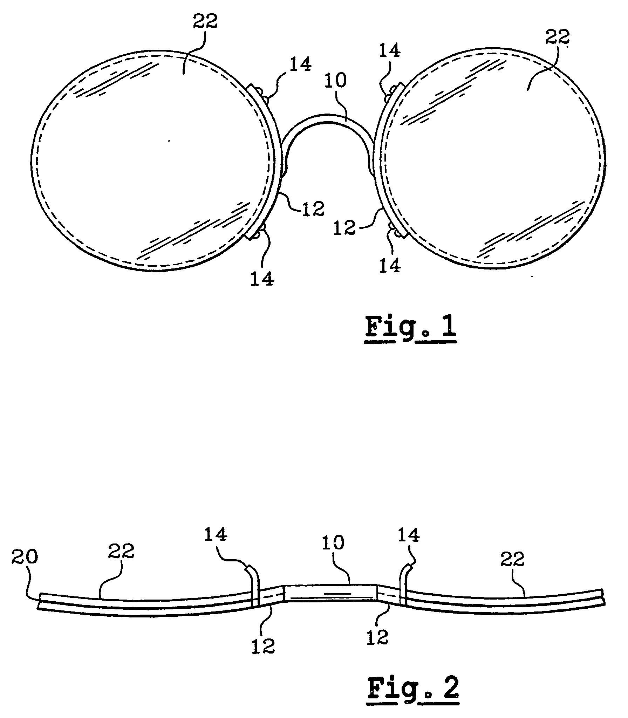

On se réfère d'abord aux figures 1 à 5 qui représentent un premier mode de réalisation de l'invention.

Dans ces figures, le dispositif portant les verres supplémentaires, appelé "face" dans la technique, comprend un ensemble moulé d'une seule pièce, constitué d'un pont ou pontêt 10, de deux branches latérales 12 et de moyens 14 d'accrochage sur des lunettes, le pont 10 étant relié à ses extrémités à des parties médianes ou intermédiaires des pièces latérales 12 et les moyens d'accrochage étant des pattes incurvées orientées vers l'extérieur.

Les branches latérales 12 forment des moyens de support de verres supplémentaires tels notamment que des verres filtrants de protection contre le rayonnement solaire, et elles sont initialement rectilignes ou incurvées en arc de cercle. Sur leur côté extérieur par rapport au pont 10, ces branches comprennent une série de saillies 16 destinées à s'emboîter dans la rainure périphérique d'un verre.

A leurs extrémités, les branches 12 comprennent un ou deux trous 18 de passage d'un fil de nylon ou analogue destiné à être engagé dans la rainure périphérique 20 d'un verre 22 pour la fixation de ce verre sur la pièce 12.

L'ensemble formé par le pont 10, les branches latérales 12 et les crochets 14 est moulé par exemple par injection en une matière plastique telle que du nylon ou analogue, ou éventuellement en métal. Les verres 22 destinés à être montés sur le face sont taillés à la même forme et aux mêmes dimensions que les verres des lunettes sur lesquelles le face doit être monté. Pour le montage des verres 22, on passe une extrémité d'un fil nylon dans un des trous 18 d'une branche latérale 12, on chauffe l'extrémité de ce fil pour former une boule retenant le fil et l'empêchant de ressortir par le trou 18, on place le verre sur la branche latérale 12 en engageant les saillies 16 dans la rainure périphérique du verre et en courbant la branche 12 pour l'adapter au contour du verre, on détermine la longueur nécessaire de fil de nylon, on engage l'autre extrémité de ce fil dans un trou 18 de l'autre extrémité de la branche 12, le verre étant retiré de la branche 12, et on chauffe l'autre extrémité du fil de nylon pour former une boule de retenue de ce fil dans le trou 18 correspondant. Ensuite, on monte le verre à l'intérieur du support formé par la branche 12 et le fil de nylon dont les extrémités sont fixées dans les trous 18 des extrémités de la branche 12, l'élasticité du fil de nylon et de la branche 12 permettant un montage serré du verre dans son support.

On procède de même avec le deuxième verre et la deuxième branche latérale 12.

Le face est alors prêt à être monté sur des lunettes, simplement en engageant les crochets 14 sur les verres ou sur la monture des lunettes.

Dans ce mode de réalisation, les branches 12 sont appliquées sur les bords latéraux des verres 22 du côté du pont 10.

La forme et la dimension des verres 22 étant identiques à celles des verres des lunettes, le face monté sur les lunettes est très peu apparent et ne gêne pas la vision du porteur des lunettes.

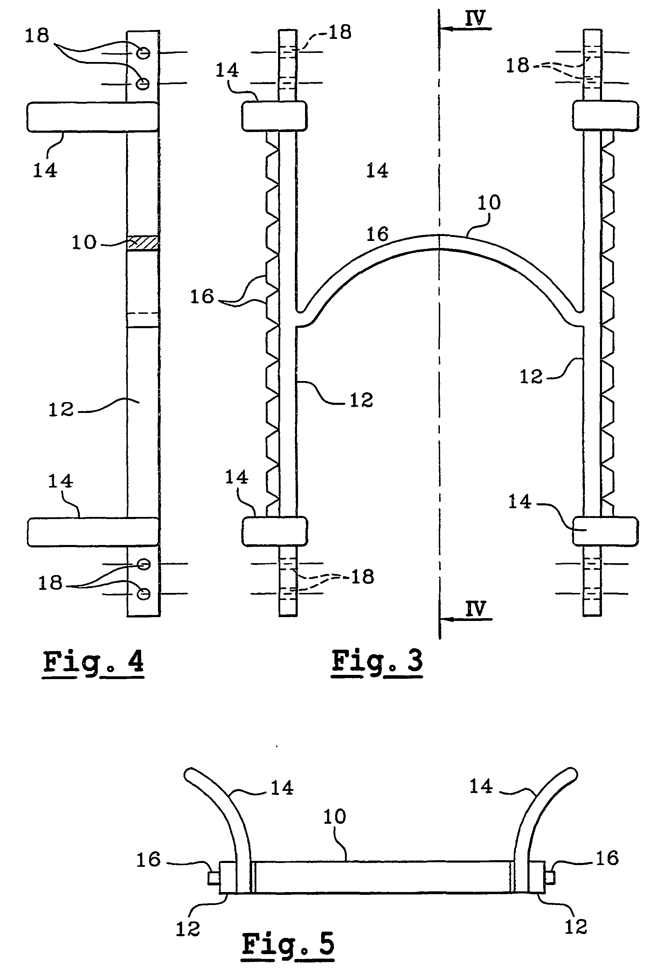

Les extrémités du pont 10 peuvent être raccordées aux branches latérales 12, soit perpendiculairement à ces branches comme représenté en figure 3, soit sensiblement tangentiellement.

Le dispositif des figures 1 à 5 est adaptable à un grand nombre de montures de lunettes différentes, grâce à la flexibilité du pont 10 et des branches latérales 12.

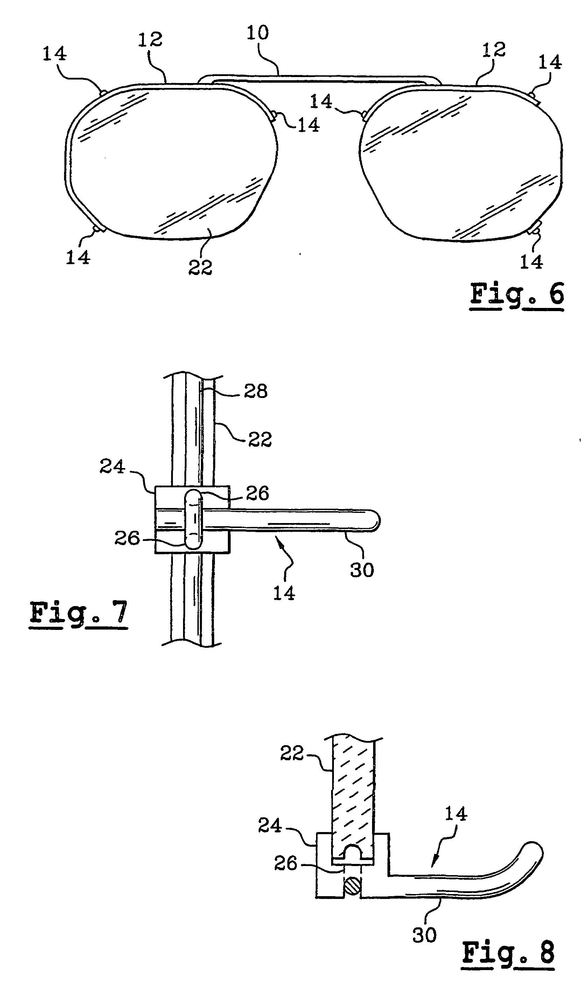

La variante de réalisation représentée aux figures 6 à 8 présente l'avantage d'être universelle, c'est-à-dire adaptable à tous les types de montures, y compris les montures épaisses en matière plastique. Dans cette variante de réalisation, le pont 10 est de forme sensiblement rectiligne et s'étend au niveau du bord supérieur des verres 22 ou légèrement au-dessus de ce bord supérieur, et est raccordé à des branches latérales 12 qui entourent les verres 22 sur sensiblement la moitié de leur périphérie, sur le côté extérieur ou côté à l'opposé du pont 10 comme représenté en partie gauche de la figure 6, ou qui entourent ces verres le long de leur bord supérieur uniquement, comme représenté en partie droite de la figure 6.

Dans le premier cas, les branches latérales 12 comportent, de moulage, des crochets 14 de fixation du dispositif sur une monture de lunettes, par exemple deux crochets 14 aux extrémités d'une branche latérale 12 et un troisième crochet sensiblement au milieu de cette branche.

Comme dans le mode de réalisation précédent, les extrémités de chaque branche latérale 12 sont réunies par un fil de nylon qui entoure le restant de la périphérie du verre 22 et est logé dans une rainure périphérique du verre.

Lorsque les branches latérales 12 s'étendent uniquement le long du bord supérieur des verres 22 comme représenté en partie droite de la figure 6, ces branches portent chacune deux crochets 14, à leurs extrémités, et un troisième crochet 14 est monté sur le fil de nylon qui enserre le verre 22 entre les extrémités de la branche latérale 12.

Dans ce cas, et comme on le voit mieux aux figures 7 et 8, le crochet 14 comprend une partie en U 24 qui est montée à cheval sur le bord du verre 22 et qui comporte deux orifices 26 de passage du fil de nylon 28 monté dans la rainure périphérique du verre 22. Ainsi, le crochet 14 est coulissant sur le fil de nylon 28 et peut être déplacé, par rapport aux deux autres crochets 14 solidaires de la branche latérale 12, pour être amené dans une position de fixation optimale du dispositif sur la monture des lunettes.

Dans cette réalisation, le crochet proprement dit est formé d'un doigt incurvé 30 s'étendant depuis la partie en U 24, de façon sensiblement perpendiculaire au verre 22 ou légèrement en oblique par rapport à celui-ci.

Bien entendu, d'autres moyens de montage des crochets 14 sur les fils de nylon 28 peuvent être utilisés : par exemple, les parties 24 des crochets 14 peuvent comprendre un seul trou parallèle à la périphérie du verre 22 pour le passage du fil 28.

Pour le reste, la variante de réalisation des figures 6 à 8 présente les mêmes caractéristiques que le mode de réalisation des figures 1 à 5, c'est-à-dire que le pont 10 est réalisé d'une seule pièce avec les branches latérales 12 et les crochets 14 prévus sur ces branches latérales, par moulage de matière plastique ou de métal, et les branches latérales 12 présentent sur leur face interne des saillies 16 destinées à être engagées dans les rainures périphériques des verres 22.

Le dispositif selon l'invention est utilisable pour le montage de verres filtrants de protection solaire sur des lunettes à verres correcteurs, mais il est également utilisable pour le montage de verres correcteurs supplémentaires sur des lunettes, par exemple pour améliorer la vision de près ou la vision nocturne.

## Revendications

1. Dispositif de fixation de verres supplémentaires sur des lunettes, ce dispositif comprenant deux branches (12) qui longent et supportent une partie de la périphérie des verres supplémentaires (22) et qui comportent des moyens de fixation d'un fil souple de montage des verres supplémentaires et des moyens (14) d'accrochage sur les verres des lunettes, les deux branches (12) étant reliées entre elles par des moyens de liaison (10) et étant réalisées d'une pièce en matière flexible avec les moyens de liaison (10), les moyens de liaison sont constitués d'une branche (10) en matière flexible formant un pont entre lesdites deux branches (12) portant les verres supplémentaires (22), **caractérisé en ce que** la face interne de chacune des deux branches (12) comporte une série de saillies (16) destinées à s'engager dans une rainure périphérique (20) du verre supplémentaire (22).

2. Dispositif selon la revendication 1, **caractérisé en ce que** le pont (10) et les branches flexibles (12) sont moulés d'une seule pièce, en matière plastique ou en métal.

3. Dispositif selon la revendication 1 ou 2, **caractérisé en ce que** les moyens d'accrochage élastique (14) sont formés d'une seule pièce avec les branches flexibles (12).

4. Dispositif selon l'une des revendications 1 à 3, **caractérisé en ce qu'**au moins un moyen d'accrochage élastique (14) est monté sur le fil souple (28) de fixation du verre supplémentaire sur la branche flexible (12).

5. Dispositif selon la revendication 4, **caractérisé en ce que** ledit moyen d'accrochage élastique (14) est réglable en position, par coulissement sur le fil souple (28).

6. Dispositif selon l'une des revendications précédentes, **caractérisé en ce que** le pont (10) est raccordé à des parties médianes ou intermédiaires desdites deux branches flexibles (12).

7. Dispositif selon l'une des revendications 1 à 6, **caractérisé en ce que** le pont (10) est raccordé aux extrémités ou au voisinage des extrémités desdites deux branches (12).

8. Dispositif selon l'une des revendications précédentes, **caractérisé en ce que** lesdites deux branches (12) sont appliquées sur des bords latéraux des verres supplémentaires (22).

9. Dispositif selon l'une des revendications précédentes, **caractérisé en ce que** lesdites deux branches (12) sont appliquées au moins sur les bords supérieurs des verres supplémentaires (22).

## Claims

1. A device for fixing supplementary lenses to eyeglasses, this device including two branches (12) which go along and support a portion of the periphery of the supplementary lenses (22) and comprise means for fixing a flexible filament for mounting supplementary lenses and attachment means (14) to the eyeglasses, the two branches (12) being connected together by connecting means (10) and being made in one piece from a flexible material with the connecting means (10), the connecting means being constituted with a branch (10) from a flexible material forming a bridge between said two branches (12) carrying the supplementary lenses (22), **characterized in that** the inside face of each of the two branches (12) includes a series of projections (16) adapted to engage in a peripheral groove (20) of the supplementary lens (22).

2. A device according to claim 1, **characterized in that** the bridge (10) and the flexible branches (12) are molded in one piece from a plastics material or diecast in one piece from a metal.

3. A device according to claim 1 or 2, **characterized in that** the attachment means (14) are elastic and formed in one piece with the flexible branches (12).

4. A device according to any one of claims 1 to 3, **characterized in that** at least one elastic attachment means (14) is mounted on the flexible filament (28) for fixing the supplementary lens to the flexible branch (12).

5. A device according to claim 4, **characterized in that** said elastic attachment means (14) can be adjusted by sliding it along the flexible filament (28).

6. A device according to any preceding claims, **characterized in that** the bridge (10) is connected to median or intermediate portions of said two flexible branches (12).

7. A device according to any one of claims 1 to 6, **characterized in that** the bridge (10) is connected to the ends or in the vicinity of the ends of said two branches (12).

8. A device according to any preceding claims, **characterized in that** said two branches (12) are applied to lateral edges of the supplementary lenses (22).

9. A device according to any preceding claims, **characterized in that** said two branches (12) are applied at least to upper edges of the supplementary lenses (22).

## Patentansprüche

1. Vorrichtung zur Befestigung zusätzlicher Linsen auf Brillen, wobei diese Vorrichtung zwei Arme (12) aufweist, die an einem Teil der Peripherie der zusätzlichen Linsen (22) entlang verlaufend diesen tragen, und die Mittel zur Befestigung eines biegsamen Fadens zur Montage der zusätzlichen Linsen umfassen und Mittel (14) zum Einhaken über die Brillengläser, wobei die beiden Arme (12) durch Verbindungsmittel (10) miteinander verbunden sind und mit den Verbindungsmitteln (10) einstückig aus flexiblem Werkstoff ausgebildet sind, wobei die Verbindungsmittel aus einem Arm (10) aus flexiblem Werkstoff bestehen, der einen Steg zwischen den beiden genannten Armen (12) bildet, die die zusätzlichen Linsen (22) tragen, **dadurch gekennzeichnet, dass** die Innenseite jedes der Arme (12) eine Reihe von Vorsprüngen (16) trägt, die dazu bestimmt sind, in eine periphere Rille (20) der zusätzlichen Linse (22) einzugreifen.

2. Vorrichtung nach Patentanspruch 1, **dadurch gekennzeichnet, dass** der Steg (10) und die flexiblen Arme (12) in einem Stück aus Kunststoff oder aus Metall geformt sind.

3. Vorrichtung nach Patentanspruch 1 oder 2, **dadurch gekennzeichnet, dass** die elastischen Einhakmittel (14) mit den flexiblen Armen (12) aus einem Stück geformt sind.

4. Vorrichtung nach einem der Patentansprüche 1 bis 3, **dadurch gekennzeichnet, dass** mindestens ein elastisches Einhakmittel (14) am biegsamen Faden (28) zur Befestigung der zusätzlichen Linse am flexiblen Arm (12) montiert ist.

5. Vorrichtung nach Patentanspruch 4, **dadurch gekennzeichnet, dass** die Stellung des genannten elastischen Einhakmittels (14) durch Gleiten auf dem biegsamen Faden (28) einstellbar ist.

6. Vorrichtung nach einem der vorangehenden Patentansprüche, **dadurch gekennzeichnet, dass** der Steg (10) an Mittel- oder Zwischenteilen der genannten beiden fexiblen Arme (12) befestigt ist.

7. Vorrichtung nach einem der Patentansprüche 1 bis 6, **dadurch gekennzeichnet, dass** der Steg (10) an den Enden oder nahe den Enden der genannten beiden Arme (12) befestigt ist.

8. Vorrichtung nach einem der vorangehenden Patentansprüche, **dadurch gekennzeichnet, dass** die genannten beiden Arme (12) an seitliche Ränder der zusätzlichen Linsen (22) angelegt sind.

9. Vorrichtung nach einem der vorangehenden Patentansprüche, **dadurch gekennzeichnet, dass** die genannten beiden Arme (12) mindestens an die oberen Ränder der zusätzlichen Linsen (22) angelegt sind.
